# EUROPÄISCHE PATENTSCHRIFT

(11) **EP 1 252 685 B1**
(45) Veröffentlichungstag und Bekanntmachung des Hinweises auf die Patenterteilung: **26.11.2003**
(21) Anmeldenummer: 00951365.6
(22) Anmeldetag: 10.07.2000
(51) Int. Cl.: H01R 4/60, H01R 4/64, F16L 25/00, F16L 11/127

(54) **ELEKTRISCH LEITENDE ROHR- ODER KABELSCHELLE**
ELECTROCONDUCTIVE PIPE OR CABLE CLAMP
BRIDE DE FIXATION ELECTRO-CONDUCTRICE POUR TUYAUX OU CABLES

(30) Priorität: 03.02.2000 DE 10004671; 30.06.2000 DE 10031101
(43) Veröffentlichungstag der Anmeldung: 30.10.2002
(73) Patentinhaber: Daume Patentbesitzgesellschaft mbH & Co. KG, 30938 Burgwedel (DE)
(72) Erfinder: DAUME, Britta, D-30938 Burgwedel (DE)
(74) Vertreter: Wagner, Carsten
(86) Internationale Anmeldenummer: EP0006532
(87) Internationale Veröffentlichungsnummer: WO01057959

(56) Entgegenhaltungen:
- EP-A- 0 744 788
- WO-A-00/08369
- DE-A- 19 841 186
- US-A- 2 279 866
- US-A- 3 891 291

## Beschreibung

Die Erfindung betrifft eine Einrichtung der im Oberbegriff des Anspruchs 1 genannten Art zum elektrisch leitenden Kontaktieren eines elektrisch leitenden Teiles eines insbesondere länglichen, beispielsweise im wesentlichen zylindrischen Körpers, beispielsweise eines Rohres oder eines Kabels.

Derartige Einrichtungen werden beispielsweise zum Anschluß eines metallischen Rohres oder eines abisolierten Außenleiters eines Koaxialkabels an ein Erdungskabel verwendet.

Durch EP 0 744 788 A1 ist eine Einrichtung der betreffenden Art bekannt, die einen Grundkörper zur Anlage an einem zu kontaktierenden Körper und ein Kontaktelement zur Herstellung einer elektrisch leitenden Verbindung mit dem zu kontaktierenden Körper aufweist, das durch Haltemittel an einer in Montageposition dem zu kontaktierenden Körper zugewandten Seite des Grundkörpers gehalten ist. Bei der bekannten Einrichtung weist der Grundkörper eine bandförmige metallische Schelle auf, die in elastisches Material eingebettet ist, wobei an der in Montageposition dem zu kontaktierenden Körper zugewandten Seite eine Kontaktfläche für das Kontaktelement freigelassen ist. Das Kontaktelement ist bei der bekannten Einrichtung durch ein Band aus Kupfergeflecht gebildet. Die Haltemittel zum Halten des Kontaktelementes an dem Grundkörper sind bei der bekannten Einrichtung durch Klebstoff oder eine Schweißverbindung gebildet, wobei in der gewünschten Befestigungslage die Längskanten des Kontaktelementes im wesentlichen parallel zu den benachbarten Rändern des Grundkörpers verlaufen.

Bei Befestigung des Kontaktelementes an dem Grundkörper mittels einer Schweißverbindung besteht die Gefahr, daß sich das Kontaktelement von dem Grundkörper löst und verlorengeht. Vor Montage der Einrichtung muß dann ein neues Kontaktelement beschafft werden. Dies ist aufwendig und erhöht sowohl die Material- als auch die Montagekosten.

Die Befestigung des Kontaktelementes mittels Klebstoffes hat den Nachteil, daß durch den Klebstoff in unerwünschter Weise der elektrische Widerstand zwischen dem Kontaktelement und der bandförmigen metallischen Schelle des Grundkörpers erhöht wird.

Durch US-A-2,279,866 ist eine Klemme zum Halten und elektrisch leitenden Kontaktieren einer Rohrleitung bekannt. Die Klemme weist ein Trägerelement auf, das teilweise mit elastischem Material ummantelt ist.

Der Erfindung liegt die Aufgabe zugrunde, eine Einrichtung der im Oberbegriff des Anspruchs 1 genannten Art anzugeben, deren Herstellung vereinfacht ist.

Diese Aufgabe wird durch die im Anspruch 1 angegebene Lehre gelöst.

Der Grundgedanke der erfindungsgemäßen Lehre besteht darin, die Haltemittel an das elastische Material des Grundkörpers anzuformen. Die Haltemittel weisen erfindungsgemäß wenigstens ein an das elastische Material des Grundkörpers angeformtes Halteteil auf, das sich von einem Rand des Kontaktelementes bis zu dem gegenüberliegenden Rand erstreckt, derart, daß das Halteteil das Kontaktelement auf seiner dem Grundkörper abgewandten Seite übergreift und so an dem Grundkörper hält. Auf diese Weise ist das Kontaktelement im wesentlichen formschlüssig an dem Grundkörper gehalten.

Durch die erfindungsgemäße Ausbildung sind somit separate Haltemittel, beispielsweise in Form von Klebstoff, einer Schweißverbindung oder eines Klemmteiles, grundsätzlich nicht mehr erforderlich. Auf diese Weise ist der Aufbau der erfindungsgemäßen Einrichtung vereinfacht und ihre Herstellung kostengünstiger gestaltet. Falls eine zusätzliche Fixierung des Kontaktelementes, beispielsweise mittels Klebstoffes, erwünscht ist, so kann die zusätzliche Fixierung eine geringere Fläche aufweisen als bei den aus dem Stand der Technik bekannten Einrichtungen.

Die Haltemittel können in beliebiger geeigneter Weise ausgebildet sein, beispielsweise als schmale Streifen elastischen Materiales, die an das elastische Material des Grundkörpers angeformt sind und quer über das Halteelement auf dessen dem Grundkörper abgewandter Seite verlaufen. Eine außerordentlich vorteilhafte Weiterbildung der erfindungsgemäßen Lehre sieht vor, daß das Halteteil eine im wesentlichen taschenförmige Aufnahme für das Kontaktelement bildet. Bei dieser Ausführungsform wird das Kontaktelement zur Befestigung an dem Grundkörper in die taschenförmige Aufnahme eingeschoben und läßt sich so in schneller und einfacher Weise an dem Grundkörper befestigen.

Eine Weiterbildung der vorgenannten Ausführungsform sieht vor, daß das Halteteil eine Ausnehmung aufweist, die die taschenförmige Aufnahme bildet. Die Ausnehmung kann beispielsweise beim Spritzgießen des Grundkörpers und der Haltemittel in das Halteteil eingeformt werden.

Eine andere Weiterbildung sieht vor, daß die taschenförmige Ausnehmung zwischen einander zugewandten Flächen des Halteteils und des Grundkörpers gebildet ist. Bei dieser Ausführungsform kann das Halteteil beispielsweise als flacher Streifen aus elastischem Material ausgebildet sein.

Grundsätzlich ist es ausreichend, daß die Haltemittel eine einzige taschenförmige Aufnahme aufweisen. Eine vorteilhafte Weiterbildung der Ausführungsform mit der taschenförmigen Aufnahme sieht jedoch vor, daß Haltemittel zwei zueinander beabstandete Halteteile aufweisen, die einander zugewandte taschenförmige Aufnahmen zur Aufnahme gegenüberliegender Enden des Kontaktelementes bilden. Bei dieser Ausführungsform sind gegenüberliegende Enden des Kontaktelementes jeweils in einer taschenförmigen Aufnahme aufgenommen, so daß das Kontaktelement besonders sicher an dem Grundkörper gehalten ist.

Eine andere vorteilhafte Weiterbildung der Ausführungsform mit der taschenförmigen Aufnahme bzw. den taschenförmigen Aufnahmen sieht vor, daß diese zum zugeordneten Ende des Kontaktelementes im wesentlichen komplementär geformt ist bzw. sind. Auf diese Weise ist das Kontaktelement mit seinem Ende bzw. seinen Enden eng in der Aufnahme gehalten.

Eine andere Ausführungsform sieht vor, daß das Halteteil als flacher Streifen ausgebildet ist, der das Kontaktelement entfernt von dessen Enden übergreift.

Eine andere vorteilhafte Weiterbildung der erfindungsgemäßen Lehre sieht vor, daß die Haltemittel entfernt von der taschenförmigen Aufnahme oder den taschenförmigen Aufnahmen wenigstens einen an das elastische Material des Grundkörpers angeformten Steg aufweisen, an dem das Kontaktelement anliegt. Durch den Steg oder die Stege ist eine Justierung des Kontaktelementes relativ zu dem Grundkörper bzw. eine zusätzliche Fixierung des Kontaktelementes an dem Grundkörper erreicht.

Es ist besonders vorteilhaft, wenn wenigstens zwei Stege vorgesehen sind, an denen das Kontaktelement mit gegenüberliegenden Bereichen seines Randes anliegt. Bei dieser Ausführungsform ist das Kontaktelement zwischen den Stegen gehalten und so gegen Bewegungen in Richtung der Stege gesichert.

Form, Größe und Material des Kontaktelementes sind in weiten Grenzen wählbar. Wenn die erfindungsgemäße Einrichtung zum Kontaktieren eines länglichen, beispielsweise im wesentlichen zylindrischen Körpers dient, beispielsweise eines metallischen Rohres oder eines abisolierten Außenleiters eines Koaxialkabels, ist es zweckmäßig, daß das Kontaktelement langgestreckt ausgebildet ist. In Montageposition erstreckt sich das Kontaktelement dann in Umfangsrichtung des zu kontaktierenden Körpers und kann beispielsweise über einen erheblichen Teil des Umfanges des zu kontaktierenden Körpers einen elektrisch leitenden Kontakt zu diesem herstellen.

Bei der Ausführungsform mit dem langgestreckten Kontaktelement und den taschenförmigen Aufnahmen ist das Kontaktelement zweckmäßigerweise in Längsrichtung an seinen Enden in den taschenförmigen Aufnahmen aufgenommen, wie dies eine Weiterbildung vorsieht.Beim Kontaktieren eines zylindrischen Gegenstandes, beispielsweise einer abisolierten Außenleitung eines Koaxialkabels, ist das Kontaktelement somit in Umfangsrichtung an seinen Enden in den taschenförmigen Aufnahmen gehalten.

Falls beispielsweise beim Kontaktieren eines Kabels nicht nur in Umfangsrichtung eine Fixierung des Kontaktelementes erforderlich ist, sondern auch in Axialrichtung, so ist es bei der Ausführungsform mit dem Steg oder den Stegen zweckmäßig, wenn das Kontaktelement an einer von seinen Längskanten bzw. an seinen beiden Längskanten an dem Steg oder den Stegen anliegt.

Das Material des Grundkörpers ist in weiten Grenzen wählbar. Der Grundkörper kann auch aus mehreren Materialien bestehen. Eine Ausführungsform sieht vor, daß der Grundkörper ein Trägerelement aus Metall aufweist. Hierdurch ist die Stabilität des Grundkörpers erhöht.

Bei der vorgenannten Ausführungsform ist das-Trägerelement zweckmäßigerweise im wesentlichen bandförmig ausgebildet. Auf diese Weise kann beispielsweise der Grundkörper der erfindungsgemäßen Einrichtung biegsam ausgebildet sein.

Eine andere Weiterbildung der erfindungsgemäßen Lehre sieht vor, daß das Trägerelement fest mit dem Teil aus elastischem Material verbunden ist oder daß das Trägerelement wenigstens teilweise mit dem elastischen Material des Grundkörpers beschichtet ist, insbesondere auf seiner in Montageposition dem zu kontaktierenden Körper abgewand-ten Seite, oder in das elastische Material des Grund-körpers eingebettet ist, wobei an der in Montageposi-tion dem zu kontaktierenden Körper zugewandten Seite des Trägerelementes eine Kontaktfläche für das Kontaktelement freigelassen ist. Diese Ausführungsform ist einfach und kostengünstig herstellbar.

Form und Größe des Grundkörpers sind in weiten Grenzen wählbar. Zum Kontaktieren eines plattenförmigen Körpers kann der Grundkörper beispielsweise plattenförmig und zum Kontaktieren eines gebogenen oder gekrümmten Körpers gebogen oder gekrümmt ausgebildet sein.

Eine insbesondere zur Kontaktierung von Rohren oder Kabeln beliebigen Querschnitts vorteilhafte Weiterbildung sieht vor, daß der Grundkörper derart ausgebildet ist, daß er in Montageposition den zu kontaktierenden Körper ringförmig oder muffenförmig umgreift. Bei dieser Ausführungsform ist der Grundkörper sicher an dem zu kontaktierenden Körper gehalten.

Grundsätzlich kann der Grundkörper starr ausgebildet sein. Zweckmäßigerweise ist er jedoch biegsam ausgebildet. Dies erleichtert die Montage der Einrichtung an dem zu kontaktierenden Körper.

Der Grundkörper kann mehrteilig ausgebildet sein. Bei einer zur Kontaktierung eines Rohres vorgesehenen erfindungsgemäßen Einrichtung kann der Grundkörper beispielsweise aus mehreren, in Umfangsrichtung des zu kontaktierenden Rohres aufeinanderfolgenden Teilen bestehen, beispielsweise aus zwei halbringförmigen Teilen. Zweckmäßigerweise ist der Grundkörper jedoch einteilig und in Umfangsrichtung offen ausgebildet und weist an seinen freien Enden abgewinkelte oder abgebogene Laschen auf, die in Montageposition miteinander verbindbar sind, vorzugsweise mittels einer Schraubvorrichtung oder einer Klemmvorrichtung. Bei dieser Ausführungsform ist aufgrund der einteiligen Ausbildung des Grundkörpers die Montage der erfindungsgemäßen Einrichtung einfach gestaltet.

Eine andere Weiterbildung sieht vor, daß der Grundkörper als um den zu kontaktierenden Körper spannbare Schelle ausgebildet ist. Dies erleichtert die Montage weiter.

Ferner sieht eine Weiterbildung der Ausführungsformen mit dem Trägerelement vor, daß das Trägerelement wenigstens einen Durchbruch, vorzugsweise beiderseits des Kontaktelementes wenigstens einen Durchbruch aufweist, durch den bzw. durch die sich das elastische Material erstreckt, derart, daß das elastische Material auf der dem Kontaktelement zugewandten Seite des Trägerelementes mit dem elastischen Material auf der dem Kontaktelement abgewandten Seite des Trägerelementes verbunden ist. Auf diese Weise ist vermieden, daß das elastische Material auf der dem Kontaktelement zugewandten Seite des Trägerelementes von diesem abhebt. Ein solches Abheben könnte zu einer Beeinträchtigung des elektrischen Kontaktes zwischen dem Kontaktelement und dem Trägerelement führen.

Um ein Eindringen von Luft und/oder Feuchtigkeit in den Bereich der Kontaktierung zu verhindern, sieht eine Weiterbildung vor, daß die Einrichtung Dichtmittel zum Abdichten eines in Montageposition zwischen dem zu kontaktierenden Körper und dem Grundkörper gebildeten Raumes gegen ein Eindringen von Luft und/oder Feuchtigkeit aufweist.

Eine vorteilhafte Weiterbildung der Ausführungsform mit den Dichtmitteln sieht vor, daß die Dichtmittel an einer in Montageposition dem zu kontaktierenden Körper zugewandten Seite des Grundkörpers angeordnete, quer zur Längsrichtung des Grundkörpers bzw. in dessen Axialrichtung zueinander beabstandete Dichtlippen aus elastischem Material aufweisen, die sich in Längsrichtung des Grundkörpers bzw. in dessen Umfangsrichtung erstrecken, vorzugsweise im wesentlichen über die gesamte Länge des Grundkörpers in dieser Richtung, und die in Montageposition der Einrichtung dichtend an dem zu kontaktierenden Körper anliegen. Diese Ausführungsform ist einfach im Aufbau und ermöglicht in zuverlässiger Weise eine Abdichtung der Kontaktierung.

Bei der vorgenannten Ausführungsform sind die Haltemittel zweckmäßigerweise an die Dichtlippen angeformt, was den Aufbau weiter vereinfacht.

Das Kontaktelement kann in beliebiger geeigneter Weise ausgebildet sein, beispielsweise als Litze oder Geflechtband aus Metall. Eine außerordentlich vorteilhafte Weiterbildung der erfindungsgemäßen Lehre sieht vor, daß das Kontaktelement aus profiliertem Blech besteht. Bei dieser Ausführungsform ist die Herstellung der erfindungsgemäßen Einrichtung auf überraschend einfache Weise einfacher und damit kostengünstiger gestaltet. Das Kontaktelement kann beispielsweise aus als Meterware vorgefertigtem profilierten Blech bestehen, das zur Anpassung an eine erforderliche Länge des Kontaktelementes in Abhängigkeit von der Größe der erfindungsgemäßen Einrichtung in einfacher Weise konfektionierbar ist. Darüber hinaus ist das erfindungsgemäße Kontaktelement aus profiliertem Blech besonders kostengünstig. Dies senkt die Herstellungskosten der erfindungsgemäßen Einrichtung. Das Kontaktelement kann aus einem beliebigen geeigneten Metallblech mit ausreichender elektrischer Leitfähigkeit bestehen, beispielsweise aus Messingblech, Stahlblech oder Kupferblech.

Die Profilierung des Kontaktelementes ist entsprechend den jeweiligen Anforderungen in weiten Grenzen wählbar. Zweckmäßigerweise ist das Kontaktelement im wesentlichen wellenförmig oder mäanderförmig oder zickzackförmig profiliert, wie dies eine Ausführungsform vorsieht. Diese Ausführungsform ist einfach und kostengünstig herstellbar. Aufgrund der im wesentlichen wellenförmigen, mäanderförmigen oder zickzackförmigen Profilierung ist auch bei größeren Bauteiltoleranzen in Montageposition der Einrichtung eine sichere Anlage des Kontaktelementes an dem zu kontaktierenden Körper gewährleistet.

Eine Weiterbildung der vorgenannten Ausführungsform sieht vor, daß die Profilierung des Kontaktelementes aus aufeinanderfolgenden, im Querschnitt runden, bogenförmigen, dreieckförmigen oder trapezförmigen Wellenbergen und Wellentälern besteht. Die Form der Wellenberge und Wellentäler ist hierbei entsprechend dem jeweiligen Anforderungen in weiten Grenzen wählbar.

Die Profilierung des Kontaktelementes kann entlang dessen Ausdehnung ungleichmäßig oder nur abschnittsweise gleichmäßig ausgebildet sein. Zweckmäßigerweise ist die Profilierung jedoch im wesentlichen über die gesamte Länge des Kontaktelementes gleichmäßig ausgebildet. Dies erleichtert die Herstellung des Kontaktelementes und bewirkt in Montageposition der Einrichtung einen gleichmäßigen Kontakt zwischen dem Kontaktelement und dem zu kontaktierenden Körper. Beispielsweise ist beim Kontaktieren eines abisolierten Außenleiters eines HF-Kabels in Montageposition der Einrichtung eine in Umfangsrichtung ungleichmäßige Belastung des Außenleiters, die zu unerwünschten Reflektionen eines über das Kabel übertragenen elektrischen Signales führen könnte, aufgrund der in Umfangsrichtung gleichmäßigen Profilierung des Kontaktelementes vermieden.

Eine andere besonders vorteilhafte Weiterbildung der Ausführungsform mit dem Kontaktelement aus profiliertem Blech sieht vor, daß das Kontaktelement in Längsrichtung an seinen Enden unprofiliert ist oder an den Enden abgeflacht ist. Dies erleichtert die Montage des Kontaktelementes an dem Grundkörper. Wenn das Kontaktelement mit seinen Enden beispielsweise in taschenförmigen Aufnahmen gehalten ist, so ist das Einführen der abgeflachten Enden in die Aufnahmen erleichtert und die Montage des Kontaktelementes an dem Grundkörper damit vereinfacht. Die Montage kann bei dieser Ausführungsform nicht nur von Hand, wie bei Einrichtungen gemäß dem Stand der Technik, sondern grundsätzlich auch maschinell erfolgen.

Grundsätzlich kann das Kontaktelement im wesentlichen starr ausgebildet sein. Eine Weiterbildung sieht jedoch vor, daß das Kontaktelement elastisch verformbar ausgebildet ist, derart, daß es in Montageposition elastisch federnd an dem elektrisch leitenden Teil des zu kontaktierenden Körpers anliegt. Bei dieser Ausführungsform ist aufgrund der elastisch federnden Anlage des Kontaktelementes an dem elektrisch leitenden Teil eine besonders sichere elektrisch leitende Verbindung erzielt. Außerdem sind durch die federnde Anlage Bauteiltoleranzen der erfindungsgemäßen Einrichtung und/oder des zu kontaktierenden Körpers ohne weiteres ausgleichbar.

Eine andere Weiterbildung der Ausführungsform mit dem Trägerelement sieht vor, daß durch die Profilierung des Kontaktelementes aufeinanderfolgende Vorsprünge gebildet sind, mit denen das Kontaktelement in Montageposition der Einrichtung, vorzugsweise abwechselnd, an dem zu kontaktierenden Körper und dem Trägerelement anliegt, derart, daß zwischen dem zu kontaktierenden Körper und dem Trägerelement eine elektrisch leitende Verbindung hergestellt ist. Bei dieser Ausführungsform ist durch die Vorsprünge eine besonders sichere elektrisch leitende Verbindung zwischen dem zu kontaktierenden Körper und dem Trägerelement, das seinerseits beispielsweise mit einem Erdungskabel verbunden sein kann, hergestellt.

Entsprechend den jeweiligen Anforderungen kann das Kontaktelement fest mit dem Grundkörper verbunden sein.

Das Kontaktelement kann jedoch auch lösbar mit dem Grundkörper verbunden sein, wie dies eine andere Ausführungsform vorsieht. Dies erleichtert die Montage des Kontaktelementes an dem Grundkörper und gegebenenfalls die Demontage.

Gemäß einer anderen Ausführungsform kann das Kontaktelement fest mit dem elastischen Material des Grundkörpers verbunden sein.

Eine andere außerordentlich vorteilhafte Weiterbildung der erfindungsgemäßen Lehre sieht vor; daß das elastische Material des Grundkörpers auf seiner dem Kontaktelement zugewandten Seite eine Anlagefläche für das Kontaktelement aufweist, die zu dem Kontaktelement im wesentlichen komplementär geformt ist, derart, daß das Kontaktelement im wesentlichen über seine gesamte Länge an dem elastischen Material des Grundkörpers anliegt. Auf diese Weise ist in Montageposition der Einrichtung eine besonders sichere Anlage des Kontaktelementes an dem elektrisch leitenden Teil des zu kontaktierenden Körpers erzielt. Das elastische Material des Grundkörpers bewirkt ferner eine elastisch federnde Anlage des Kontaktelementes an dem elektrisch leitenden Teil des zu kontaktierenden Körpers.

Bei der vorgenannten Ausführungsform kann das Kontaktelement auf beliebige geeignete Weise mit dem elastischen Material des Grundkörpers verbunden sein. Beispielsweise kann das Teil aus elastischem Material aus einem extrudierten Bandmaterial bestehen, mit dem das Kontaktelement verbunden ist. Eine vorteilhafte Weiterbildung sieht jedoch vor, daß das Kontaktelement mit dem elastischen Material des Grundkörpers umspritzt ist. Diese Ausführungsform ist einfach und kostengünstig herstellbar. Außerdem ist bei dieser Ausführungsform sichergestellt, daß die Anlagefläche des Grundkörpers zu der Profilierung des Kontaktelementes komplementär geformt ist.

Eine Weiterbildung der Ausführungsform mit dem einteiligen Grundkörper und den Laschen sieht vor, daß sich das Kontaktelement bis in die Laschen erstreckt. Bei dieser Ausführungsform kann beispielsweise ein Erdungskabel mit den Laschen verbunden werden, so daß über das Kontaktelement eine elektrisch leitende Verbindung zwischen dem Erdungskabel und dem elektrisch leitenden Teil des zu kontaktierenden Körpers, beispielsweise einem abisolierten Außenleiter eines Koaxialkabels, hergestellt ist.

Schließlich sieht eine Weiterbildung der erfindungsgemäßen Lehre vor, daß das elastische Material des Grundkörpers und/oder der Dichtlippen durch ein Elastomer, insbesondere vulkanisierten Kautschuk und/oder ein thermoplastisches Elastomer gebildet ist. Diese Materialien sind kostengünstig und einfach verarbeitbar und weisen eine hohe Widerstandsfähigkeit gegen chemische und mechanische Einflüsse auf.

Die Erfindung wird nachfolgend anhand der beigefügten Zeichnung näher erläutert, in der Ausführungsbeispiele dargestellt sind.

Es zeigt:
- Fig. 1: in schematischer Perspektivansicht ein Ausführungsbeispiel der erfindungsgemäßen Einrichtung in Form einer Schelle,
- Fig. 2: in schematischer Darstellung eine Ansicht auf die radiale Innenfläche der Einrichtung gemäß Fig. 1,
- Fig. 3: einen Schnitt entlang einer Linie III-III in Fig. 2,
- Fig. 4: einen Schnitt entlang einer Linie IV-IV in Fig. 2,
- Fig. 5: in schematischer Perspektivansicht die Einrichtung gemäß Fig. 1 in Montageposition,
- Fig. 6: in gleicher Darstellung wie Fig. 2 ein zweites Ausführungsbeispiel einer erfindungsgemäßen Einrichtung,
- Fig. 7: einen Schnitt VII-VII in Fig. 6,
- Fig. 8: in stark schematisierter Darstellung einen Radialschnitt durch die Einrichtung gemäß Fig. 6 in Montageposition,
- Fig. 9-11: in stark schematisierter Darstellung verschiedenene Ausführungsformen von Querschnitten von Kontaktelementen aus profiliertem Blech und
- Fig. 12: in gleicher Darstellung wie Fig. 2 ein drittes Ausführungsbeispiel einer erfindungsgemäßen Einrichtung.

In den Figuren der Zeichnung sind gleiche oder sich entsprechende Bauteile mit den gleichen Bezugszeichen versehen.

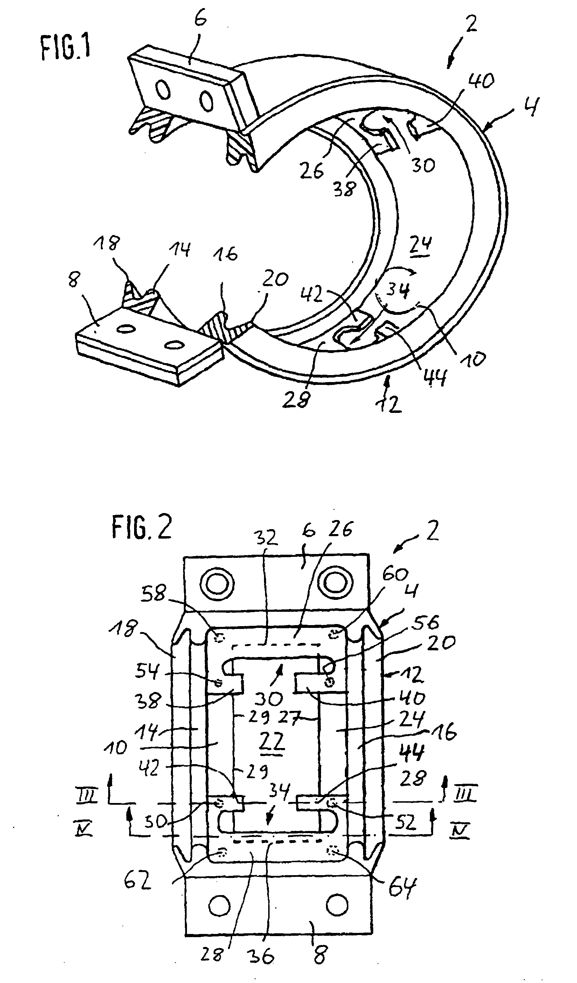

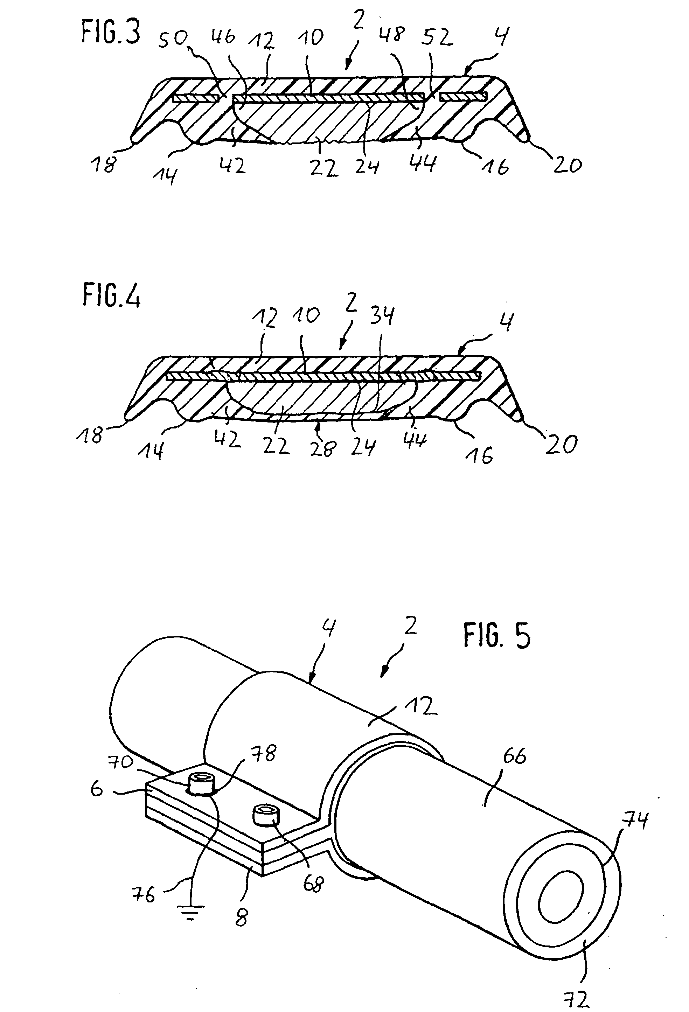

In Fig. 1 ist ein erstes Ausführungsbeispiel einer erfindungsgemäßen Einrichtung 2 dargestellt, die einen als Schelle ausgebildeten, biegsamen Grundkörper 4 aufweist, der bei diesem Ausführungsbeispiel einteilig und in Umfangsrichtung offen ausgebildet ist und an seinen freien Enden abgewinkelte Laschen 6, 8 aufweist, die in Montageposition in weiter unten näher erläuterter Weise miteinander verbindbar sind. Die Einrichtung 2 dient dazu, einen abisolierten Außenleiter eines Koaxialkabels mit einem Erdungskabel zu verbinden und so zu erden, wie dies weiter unten anhand von Fig. 5 näher erläutert wird.

Der Grundkörper 4 weist ein im wesentlichen bandförmiges Trägerelement 10 aus Metall sowie ein Teil 12 aus elastischem Material, bei dem Ausführungsbeispiel einem Elastomer, auf, in das das Trägerelement 10 mit seinen axialen Rändern eingebettet und so mit dem Teil 12 aus elastischem Material verbunden ist (vgl. Fig. 3).

Das Teil 12 aus elastischem Material bildet an der in Montageposition einem zu kontaktierenden Körper zugewandten Seite Dichtlippen 14, 16 sowie jeweils in Axialrichtung außen von den Dichtlippen 14, 16 weitere Dichtlippen 18, 20. In Montageposition liegt der Grundkörper 4 mit den Dichtlippen 14, 16 sowie den weiteren Dichtlippen 18, 20 dichtend an einer Außenfläche des zu kontaktierenden Körpers an, so daß ein in Montageposition zwischen dem zu kontaktierenden Körper und dem Grundkörper 4 gebildeter Raum gegen ein Eindringen von Luft und/oder Feuchtigkeit abgedichtet ist.

Zum Halten eines in Fig. 1 nicht dargestellten Kontaktelementes weist die erfindungsgemäße Einrichtung 2 ferner Haltemittel auf, die anhand von Fig. 2 näher erläutert werden.

In Fig. 2 ist die Einrichtung 2 mit einem Kontaktelement 22 dargestellt, das bei diesem Ausführungsbeispiel durch ein Geflechtband aus Metall gebildet und an der radialen Innenfläche 24 des Metallteiles 10 des Grundkörpers 4 gehalten ist.

Die Haltemittel zum Halten des Kontaktelementes 22 an dem Grundkörper 4 weisen bei diesem Ausführungsbeispiel Teile 26, 28 auf, die aus dem gleichen elastischen Material bestehen wie die Dichtlippen 14 bis 20 und das Teil 12 und die in Axialrichtung des Grundkörpers 4 innen an die Dichtlippen 14, 16 angeformt sind.

Wie aus Fig. 2 ersichtlich ist, erstreckt sich das Teil 26 von einem Längsrand 27 des Kontaktelementes 22 zu dessen gegenüberliegendem Längsrand 29 quer über das Kontaktelement 22, wobei es das Kontaktelement 22 auf seiner dem Grundkörper 4 abgewandten Seite eng übergreift und so an dem Grundkörper 4 hält.

Zwischen einander zugewandten Flächen des Teiles 26 und des Trägerelementes 10 ist hierbei eine taschenförmige Aufnahme 30 für ein freies Ende 22 des Kontaktelementes 22 gebildet. Die taschenförmige Aufnahme 30 ist zu dem freien Ende 32 des Kontaktelementes im wesentlichen komplementär geformt, so daß dieses eng in der Aufnahme 30 aufnehmbar ist. In entsprechender Weise bilden einander zugewandte Flächen des Teiles 28 und des Trägerelementes 10 eine taschenförmige Aufnahme 34 zur Aufnahme eines dem freien Ende 32 gegenüberliegenden freien Endes 36 des Kontaktelementes 22. Dadurch, daß das Kontaktelement 22 in Umfangsrichtung mit seinen Enden 32, 36 in den taschenförmigen Aufnahmen 30, 34 aufgenommen ist, ist es in Umfangsrichtung der Einrichtung 2 im wesentlichen fixiert.

Durch die komplementäre Formung der taschenförmigen Aufnahmen 30, 34 zu den zugeordneten Enden 32, 36 des Kontaktelementes 22 ist das Kontaktelement 22 bei diesem Ausführungsbeispiel sowohl in Umfangsrichtung als auch in Axialrichtung der Einrichtung 2 fixiert. Die taschenförmigen Aufnahmen 30, 34 können jedoch auch so ausgebildet sein, daß das Kontaktelement 22 sowohl in Umfangsrichtung als auch in Axialrichtung der Einrichtung 2 verschiebbar in den taschenförmigen Aufnahmen 30, 34 aufgenommen ist. Bei einer solchen Ausführungsform können die Teile 26, 28 durch flache Streifen elastischen Materials gebildet sein.

Um das Kontaktelement 22 zusätzlich noch entfernt von den Aufnahmen 30, 34 zu fixieren, weist das Teil 26 zwei Stege 38, 40 auf, die sich von den Dichtlippen 14 bzw. 16 in Axialrichtung des Grundkörpers 4 nach innen erstrecken und das Kontaktelement 22 auf seiner dem Grundkörper 4 abgewandten Seite übergreifen.

In entsprechender Weise weist das Teil 28 Stege 42, 44 auf.

Zur Befestigung des Kontaktelementes 22 an dem Grundkörper 4 wird dieses zunächst mit seinem Ende 32 in Fig. 2 nach oben unter die Stege 38, 40 bis in die taschenförmige Ausnehmung 32 geschoben. Daran anschließend wird das Kontaktelement 22 mit seinem gegenüberliegenden Ende 36 in Fig. 2 nach unten unter die Stege 42, 44 bis in die taschenförmige Ausnehmung 34 geschoben. Hierbei werden das Kontaktelement 22 und die Stege 38 bis 44 in der erforderlichen Weise elastisch verformt. In der in Fig. 2 dargestellten Montageposition liegt das Kontaktelement 22 mit seiner dem Grundkörper 4 zugewandten Seite an dessen Trägerelement 10 an und wird von den Haltemitteln, die durch die taschenförmigen Aufnahmen 30, 34 und die Stege 38 bis 44 gebildet sind, sowohl in Umfangsrichtung als auch in Axialrichtung des Grundkörpers 4 im wesentlichen formschlüssig an diesem gehalten. Die erfindungsgemäße Lehre ermöglicht somit in besonders einfacher Weise die Befestigung des Kontaktelementes 22 an dem Grundkörper 4, ohne daß hierfür Klebstoff, eine Schweißverbindung oder dergleichen erforderlich ist.

Um ein Einführen der Enden 32, 36 des Kontaktelementes 22 in die taschenförmigen Aufnahmen 30, 34 zu erleichtern, können die Teile 26, 28 mit sich in Umfangsrichtung des Grundkörpers 4 erstreckenden, durchgehenden Schlitzen versehen sein.

Fig. 3 zeigt einen Schnitt entlang einer Linie III-III in Fig. 2. Es ist ersichtlich, daß die Stege 42, 44 Hinterschneidungen 46, 48 aufweisen und das Kontaktelement 22 an dessen gegenüberliegenden Rändern 27, 29 formschlüssig übergreifen. Um zu verhindern, daß die Stege 42, 44 von dem Trägerelement 10 des Grundkörpers 4 abheben und hierbei das Kontaktelement 22 den Kontakt zu dem Trägerelement 10 verliert, weist das Trägerelement 10 im Bereich der Stege 42, 44 Durchbrüche 50, 52 auf, durch die sich das elastische Material des Grundkörpers 4 erstreckt, so daß die Stege 42, 44 mit dem elastischen Material auf der radialen Außenseite des Trägerelementes 10 verbunden sind. Auf diese Weise ist ein Abheben der Stege 42, 44 von dem Trägerelement 10 zuverlässig vermieden. In entsprechender Weise sind im Bereich der Stege 38, 40 Durchbrüche 54, 56 sowie im Bereich der taschenförmigen Aufnahme 30 Durchbrüche 58, 60 und im Bereich der taschenförmigen Aufnahme 34 Durchbrüche 62, 64 gebildet.

Aus Fig. 4, die einen Schnitt entlang einer Linie IV-IV in Fig. 2 zeigt, ist ersichtlich, daß die taschenförmige Aufnahme 34 im Querschnitt zu dem freien Ende 36 des Kontaktelementes 22 im wesentlichen komplementär geformt ist.

Fig. 5 zeigt die Einrichtung gemäß Fig. 1 in Montageposition, in der der Grundkörper 4 den zu kontaktierenden Körper, bei dem Ausführungsbeispiel ein Koaxialkabel 66, muffenförmig umgreift. Zur Befestigung der Einrichtung 2 an dem Koaxialkabel 66 wird der als Schelle ausgebildete Grundkörper 4 um das zu kontaktierende Koaxialkabel 66 herum mittels Schrauben 68, 70 aus Metall gespannt, die sich durch in der Lasche 6 gebildete Durchgangsbohrungen erstrecken und in in der Lasche 8 gebildete Gewindebohrungen eingreifen.

Beim Spannen des Grundkörpers 4 gelangen die Dichtlippen 14, 16 und die weiteren Dichtlippen 18, 20 dichtend an der Ummantelung 72 des Koaxialkabels 66 zur Anlage, so daß sie den in Montageposition zwischen dem Koaxialkabel 66 und dem Grundkörper 4 gebildeten Raum gegen ein Eindringen von Luft und/oder Feuchtigkeit abdichten.

Beim Spannen des Grundkörpers 4 gelangt ferner das Kontaktelement 22 entfernt von den Dichtlippen 14-20 an dem zuvor abisolierten Außenleiter 74 des Koaxialkabels 66 zur Anlage, so daß über das Kontaktelement 22 eine elektrisch leitende Verbindung zwischen dem Außenleiter 74 und dem Trägerelement 10 des Grundkörpers 4 hergestellt ist. Da sich das Trägerelement 10 bis in die Laschen 6, 8erstreckt, ist mittels der Schrauben 70 eine elektrisch leitende Verbindung zu einem Leiter, beispielsweise einem in Fig. 5 schematisch angedeuteten Erdungskabel 76, herstellbar. Hierzu kann das Erdungskabel 76 mittels einer Anschlußöse 78 mit einer der Schrauben 70 verbunden sein.

Es ist somit in der gewünschten Weise eine elektrisch leitende Verbindung zwischen dem Erdungskabel 76 und dem Außenleiter 74 des Koaxialkabels 66 hergestellt, so daß dieser Außenleiter 74 geerdet ist.

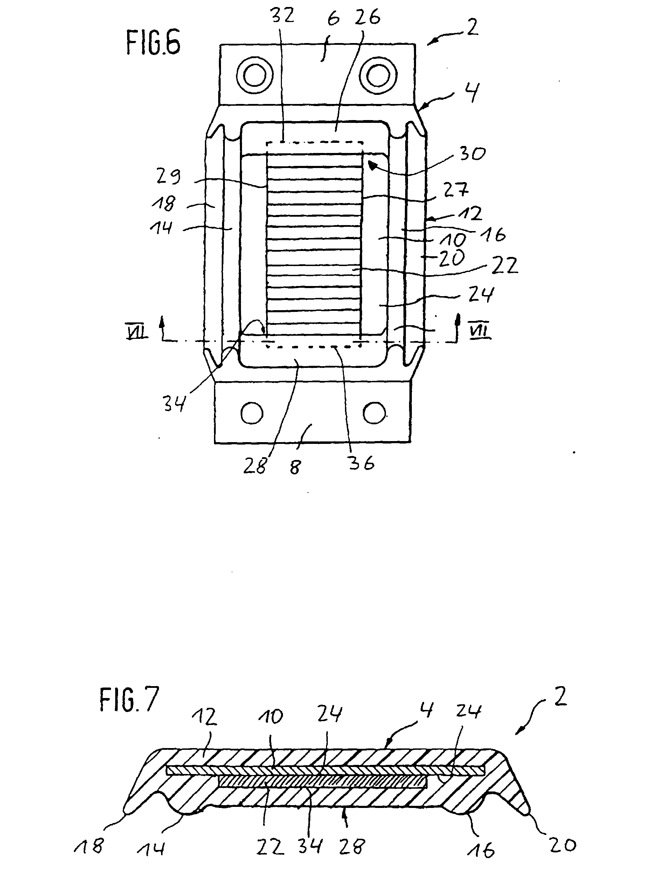

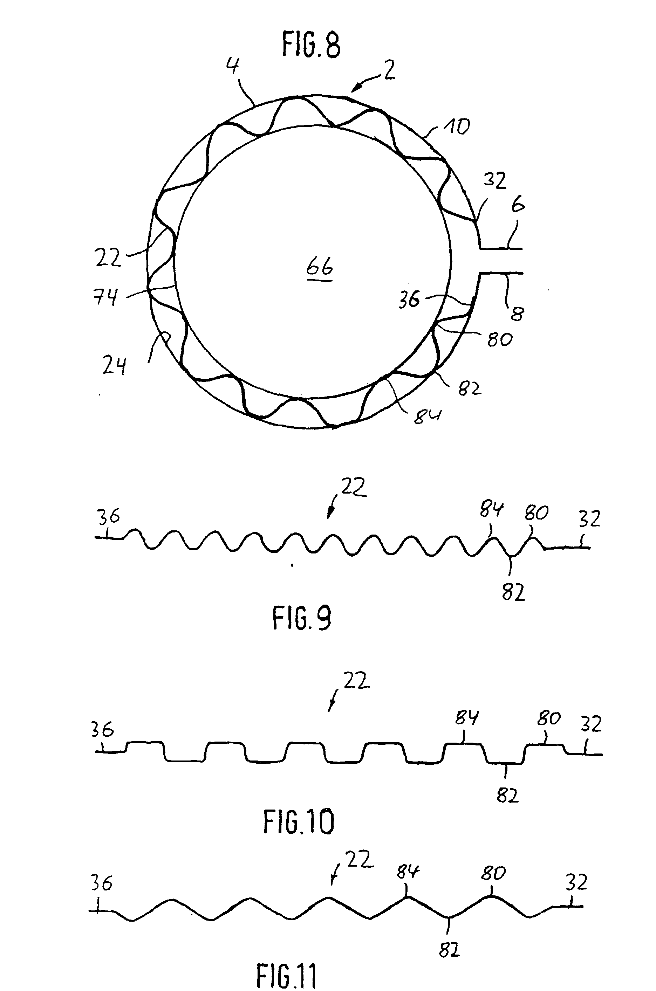

In Fig. 6 ist ein zweites Ausführungsbeispiel einer erfindungsgemäßen Einrichtung 2 dargestellt, das sich von dem Ausführungsbeispiel gemäß Fig. 1 dadurch unterscheidet, daß das Kontaktelement 22, das in den taschenförmigen Aufnahmen 30, 34 an der radialen Innenfläche 24 des Trägerelementes 10 an den Grundkörper 4 gehalten ist, aus profiliertem Blech besteht. Das Kontaktelement 22 ist bei diesem Ausführungsbeispiel im wesentlichen wellenförmig bzw. mäanderformig profiliert, wie dies weiter unten anhand von Fig. 8 näher erläutert wird.

Aus Fig. 7, die einen Schnitt entlang einer Linie VII-VII in Fig. 2 zeigt, ist ersichtlich, daß die taschenförmige Aufnahme 34 zu dem freien Ende 36 des Kontaktelementes 22 im wesentlichen komplementär geformt ist.

Fig. 8 zeigt stark schematisiert einen Radialschnitt durch die Einrichtung 2 gemäß Fig. 6 in Montageposition, und zwar in Axialrichtung in einem Bereich, in dem das Kontaktelement 22 an dem abisolierten Außenleiter 74 des Koaxialkabels 66 anliegt. Aus dieser Figur ist ersichtlich, daß das Kontaktelement 22 im wesentlichen mäanderförmig bzw. wellenförmig profiliert ist. Durch die Profilierung des Bleches, aus dem das Kontaktelement 22 besteht, sind aufeinanderfolgende Vorsprünge in Form von im Querschnitt bogenförmigen Wellenbergen und Wellentälern gebildet, von denen in Fig. 5 lediglich drei Vorsprünge mit den Bezugszeichen 80, 82, 84 versehen sind. Mit den aufeinanderfolgenden Vorsprüngen 80, 82, 84 liegt das Kontaktelement 22 abwechselnd an dem abisolierten Außenleiter 74 des Koaxialkabels 66 und der radialen Innenfläche 24 des Trägerelementes 10 des Grundkörpers an. Auf diese Weise ist eine sichere elektrisch leitende Verbindung zwischen dem Außenleiter 74 und dem Trägerelement 10 und damit über die Laschen 6, 8 auch mit dem Erdungskabel 76 hergestellt.

Das Kontaktelement 22 besteht bei diesem Ausführungsbeispiel aus dünnem Metallblech und ist daher elastisch verformbar, so daß es in Montageposition der Einrichtung 2 elastisch federnd an dem Außenleiter 74 und der radialen Innenfläche 24 des Trägerelementes 10 anliegt.

Wie aus Fig. 8 ersichtlich ist, ist das Kontaktelement 22 bei diesem Ausführungsbeispiel in seiner Längsrichtung, also in Umfangsrichtung des Grundkörpers 4 im wesentlichen gleichmäßig profiliert. Auf diese Weise ist in Montageposition der Einrichtung 2 eine in Umfangsrichtung des Koaxialkabels 66 stark ungleichmäßige Belastung von dessen Außenleiter 74 vermieden, die bei einem HF-Kabel zu unerwünschten Reflexionen eines über das Kabel übertragenen elektrischen Signals führen könnte. Hierbei ist die Belastung des Außenleiters 74 in Umfangsrichtung umso gleichmäßiger, je geringer der Abstand in Umfangsrichtung der Wellenberge der Profilierung des Kontaktelementes 22 ist.

Das aus profiliertem Blech bestehende Kontaktelement 22 ist einfach und kostengünstig herstellbar sowie leicht konfektionierbar. Auf diese Weise ist die Herstellung der erfindungsgemäßen Einrichtung 2 einfach und damit kostengünstig gestaltet.

Die Profilierung des Kontaktelementes 22 ist in weiten Grenzen wählbar. Die Figuren 9 bis 11 zeigen Beispiele für verschiedene Profilierungen, wobei in den Figuren 9 und 10 die Profilierung des Kontaktelementes 22 im Querschnitt im wesentlichen mäanderförmig bzw. wellenförmig und in Fig. 11 im wesentlichen zickzackförmig ausgebildet ist.

In den Figuren 9 bis 11 ist angedeutet, daß die Enden 32, 36 des Kontaktelementes 22 unprofiliert sind, um das Einsetzen der Enden 32, 36 in die taschenförmigen Aufnahmen 30, 34 zu erleichtern. Falls das Kontaktelement 22 beispielsweise aus durchgehend profilierter Meterware besteht, so können die Enden 32, 36 des Kontaktelementes 22 nach dessen Konfektionierung abgeflacht werden.

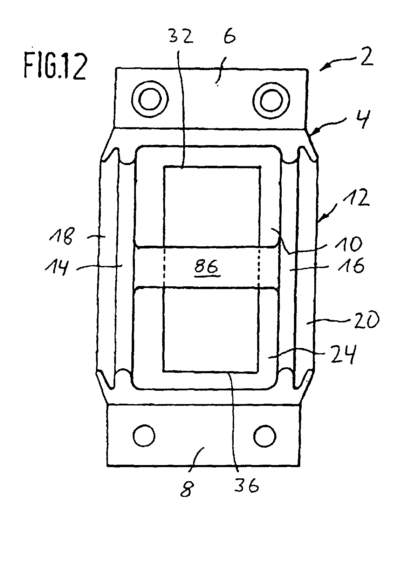

In Fig. 12 ist ein drittes Ausführungsbeispiel einer erfindungsgemäßen Einrichtung 2 dargestellt, das sich von dem Ausführungsbeispiel gemäß Fig. 1 dadurch unterscheidet, daß die an das elastische Material 12 des Grundkörpers 4 angeformten Haltemittel ein einziges Teil 86 aufweisen. Das Teil 86 ist in Axialrichtung innen an die Dichtlippen 14, 16 angeformt und als flacher Streifen aus Elastomer ausgebildet, der sich von dem Längsrand 27 des Kontaktelementes 22 bis zu dem gegenüberliegenden Längsrand 29 quer über das Kontaktelement 22 erstreckt und das Kontaktelement 22 auf seiner dem Grundkörper 4 abgewandten Seite haltend übergreift. Wie aus Fig. 12 ersichtlich ist, ist das Teil 86 entfernt von den Enden 32, 36 des Kontaktelementes 22 angeordnet.

## Patentansprüche

1. Einrichtung zum elektrisch leitenden Kontaktieren eines elektrisch leitenden Teiles eines im wesentlichen zylindrischen Körpers, beispielsweise eines Rohres oder eines Kabels,
mit einem als um den zu kontaktierenden Körper spannbare Schelle ausgebildeten Grundkörper (4) zur Anlage an den zu kontaktierenden Körper, wobei der Grundkörper (4) cin Trägerelement (10) aus Metall und ein Teil aus elastischem Material aufweist und
mit einem an der radialen Innenfläche des Trägerelementes (10) durch Haltemittel gehaltenen separaten Kontaktelement (22) zur Herstellung einer elektrisch leitenden Verbindung zwischen dem Trägerelement (10) und dem zu kontaktierenden Körper,
**dadurch gekennzeichnet,**
**daß** das Kontaktelement (22) lösbar mit dem Grundkörper (4) verbunden ist und
**daß** die Haltemittel wenigstens ein an das elastische Material des Grundkörpers (4) angeformtes Halteteil (26) aus elastischem Material aufweisen, das sich von einem axialen Rand (27) des Kontaktelementes (22) bis zu dem gegenüberliegenden axialen Rand (29) des Kontaktelementes (22) erstreckt, derart, daß das Halteteil (26) das Kontaktelement (22) auf seiner dem Grundkörper (4) abgewandten Seite übergreift und so an dem Grundkorper (4) hält.

2. Einrichtung nach Anspruch 1, **dadurch gekennzeichnet, daß** das Halteteil (26) eine im wesentlichen taschenförmige Aufnahme (30) für das Kontaktelement (22) bildet.

3. Einrichtung nach Anspruch 2, **dadurch gekennzeichnet, daß** das Halteteil (26) eine Ausnehmung aufweist, die die taschenförmige Aufnahme (30) bildet.

4. Einrichtung nach Anspruch 2, **dadurch gekennzeichnet, daß** die taschenförmige Aufnahme (30) zwischen einander zugewandten Flächen des Halteteiles (26) und des Grundkörpers (4) gebildet ist.

5. Einrichtung nach einem der Ansprüche 2 bis 4, **dadurch gekennzeichnet, daß** die Haltemittel zwei zueinander beabstandete Halteteile (26, 28) aufweisen, die einander zugewandte taschenförmige Aufnahmen (30, 34) zur Aufnahme gegenüberliegender Enden (32, 36) des Kontaktelementes (22) aufweisen.

6. Einrichtung nach Anspruch 2, **dadurch gekennzeichnet, daß** die taschenförmige Aufnahme zu dem zugeordneten Ende des Kontaktelementes (22) im wesentlichen komplementär geformt ist.

7. Einrichtung nach Anspruch 1, **dadurch gekennzeichnet, daß** wenigstens ein Halteteil (86) als flacher Streifen ausgebildet ist, der das Kontaktelement (22) entfernt von dessen Enden (32, 36) übergreift.

8. Einrichtung nach Anspruch 2, **dadurch gekennzeichnet, daß** die Haltemittel entfernt von der taschenförmigen Aufnahme oder den taschenförmigen Aufnahmen (30, 34) wenigstens einen an das elastische Material des Grundkörpers (4) angeformten Steg (38, 40, 42, 44) aufweisen, an dem das Kontaktelement (22) in Montageposition anliegt.

9. Einrichtung nach Anspruch 8, **dadurch gekennzeichnet, daß** wenigstens zwei Stege (38, 40, 42, 44) vorgesehen sind, an denen das Kontaktelement (22) in Montageposition mit gegenüberliegenden Rändern anliegt.

10. Einrichtung nach Anspruch 1 , **dadurch gekennzeichnet, daß** das Kontaktelement (22) langgestreckt ausgebildet ist.

11. Einrichtung nach Anspruch 10, **dadurch gekennzeichnet, daß** das Kontaktelement (22) in Längsrichtung an seinen Enden (32, 36) in taschenförmigen Aufnahmen (30, 34) aufgenommen ist.

12. Einrichtung nach Anspruch 8, **dadurch gekennzeichnet, daß** das Kontaktelement (22) in Montageposition an einer von seinen Längskanten bzw. an seinen beiden Längskanten an dem Steg oder den Stegen (38, 40, 42, 44) anliegt.

13. Einrichtung nach Anspruch 1, **dadurch gekennzeich** **net,** daß das Trägerelement (10) im wesentlichen band-förmig ausgebildet ist.

14. Einrichtung nach Anspruch 1, **dadurch gekennzeichnet, daß** das Trägerelement (10) fest mit dem Teil (12) aus elastischem Material verbunden ist oder daß das Trägerelement (10) wenigstens teilweise mit dem elastischen Material (12) des Grundkörpers (4) beschichtet ist, insbesondere auf seiner in Montageposition dem zu kontaktierenden Körper abgewandten Seite, oder in das elastische Material (12) des Grundkörpers (4) eingebettet ist, wobei an der in Montageposition dem zu kontaktierenden Körper zugewandten Seite des Trägerelementes (10) eine Kontaktfläche für das Kontaktelement (22) freigelassen ist.

15. Einrichtung nach Anspruch 1, **dadurch gekennzeichnet, daß** der Grundkörper (4) derart ausgebildet ist, daß er in Montageposition den zu kontaktierenden Körper (2) ringförmig oder muffenförmig umgreift.

16. Einrichtung nach Anspruch 1, **dadurch gekennzeichnet, daß** der Grundkörper (4) biegsam ausgebildet ist.

17. Einrichtung nach Anspruch 1, **dadurch gekennzeichnet, daß** der Grundkörper (4) einteilig und in Umfangsrichtung offen ausgebildet ist und an seinen freien Enden abgewinkelte oder abgebogene Laschen (6, 8) aufweist, die in Montageposition miteinander verbindbar sind, vorzugsweise mittels einer Schraubvorrichtung oder einer Klemmvorrichtung.

18. Einrichtung nach Anspruch 1 , **dadurch gekennzeichnet, daß** das Trägerelement (10) wenigstens einen Durchbruch (50-60) , vorzugsweise beiderseits des Kontaktelementes (22) wenigstens einen Durchbruch aufweist, durch den bzw. durch die sich das elastische Material (12) erstreckt, derart, daß das elastische Material (12) auf der dem Kontaktelement (22) zugewandten Seite des Trägerelementes (10) mit dem elastischen Material auf der dem Kontaktelement (22) abgewandten Seite des Trägerelementes (10) verbunden ist.

19. Einrichtung nach Anspruch 1 , **dadurch gekennzeichnet, daß** die Einrichtung (2) Dichtmittel zum Abdichten eines in Montageposition zwischen dem zu kontaktierenden Körper und dem Grundkörper (4) gebildeten Raumes gegen ein Eindringen von Luft und/oder Feuchtigkeit aufweist.

20. Einrichtung nach Anspruch 19, **dadurch gekennzeichnet, daß** die Dichtmittel an einer in Montageposition dem zu kontaktierenden Körper zugewandten Seite des Grundkörpers (4) angeordnete, quer zur Längsrichtung des Grundkörpers (4) bzw. in dessen Axialrichtung zueinander beabstandete Dichtlippen (14, 16) aus elastischem Material aufweisen, die sich in Längsrichtung des Grundkörpers (4) bzw. in dessen Umfangsrichtung erstrecken, vorzugsweise im wesentlichen über die gesamte Länge des Grundkörpers (4) in dieser Richtung, und die in Montageposition der Einrichtung (2) dichtend an dem zu kontaktierenden Körper anliegen.

21. Einrichtung nach Anspruch 20, **dadurch gekennzeich** **net,** daß die Haltemittel an die Dichtlippen (14, 26) angeformt sind.

22. Einrichtung nach Anspruch 1, **dadurch gekennzeichnet, daß** das Kontaktelement (22) aus profiliertem Blech besteht.

23. Einrichtung nach Anspruch 22, **dadurch gekennzeichnet, daß** das Kontaktelement (22) im wesentlichen wellenförmig oder mäanderförmig oder zickzackförmig profiliert ist.

24. Einrichtung nach Anspruch 22, **dadurch gekennzeichnet, daß** die Profilierung des Kontaktelementes (22) aus aufeinanderfolgenden, im Querschnitt runden, bogenförmigen, dreieckförmigen oder trapezförmigen Wellenbergen (80, 84) und Wellentälern (82) besteht.

25. Einrichtung nach Anspruch 22, **dadurch gekennzeichnet, daß** die Profilierung im wesentlichen über die gesamte Länge des Kontaktelementes (22) gleichmäßig ausgebildet ist.

26. Einrichtung nach Anspruch 22 oder 25, **dadurch gekennzeichnet, daß** das Kontaktelement (22) in Längsrichtung an seinen Enden (32, 34) unprofiliert ausgebildet oder an diesen Enden (32, 34) abgeflacht ist.

27. Einrichtung nach Anspruch 22, **dadurch gekennzeichnet, daß** das Kontaktelement (22) elastisch verformbar ausgebildet ist, derart, daß es in Montageposition elastisch federnd an dem zu kontaktierenden Körper anliegt.

28. Einrichtung nach Anspruch 22, **dadurch gekennzeichnet, daß** durch die Profilierung des Kontaktelementes (22) aufeinanderfolgende Vorsprünge (80, 82, 84) gebildet sind, mit denen das Kontaktelement (22) in Montageposition der Einrichtung (2), vorzugsweise abwechselnd, an dem elektrisch leitenden Teil des zu kontaktierenden Körpers und dem Trägerelement (10) anliegt, derart, daß zwischen dem elektrisch leitenden Teil des zu kontaktierenden Körpers und dem Trägerelement (10) des Grundkörpers (4) eine elektrisch leitende Verbindung hergestellt ist.

29. Einrichtung nach einem der vorhergehenden Ansprüche, **dadurch gekennzeichnet, daß** das elastische Material des Grundkörpers (4) und/oder der Dichtlippen (14, 16, 18, 20) durch ein Elastomer, insbesondere vulkanisierten Kautschuk und/oder ein thermoplastisches Elastomer gebildet ist.

## Claims

1. A device for the electrically conductive bonding of an electrically conductive part of a substantially cylindrical body, for example a pipe or a cable,
having a basic member (4) constructed as a clamp that can be clamped around the member to be bonded, for lying against the member to be bonded, the base member (4) comprising a support element (10) made of metal and a part made of elastic material, and
having a separate contact element (22), retained on the radial inner face of the support element (10) by retaining means, for the production of an electrically conductive connection between the support element (10) and the member to be bonded,
**characterised in that** the contact element (22) is detachably connected to the basic member (4)
and **in that** the retaining means comprise at least one retaining part (26) made from elastic material and moulded onto the elastic material of the basic member (4), which extends from an axial edge (27) of the contact element (22) right to the opposite axial edge (29) of the contact element (22) in such a manner that the retaining part (26) engages over the contact element (22) on its side facing away from the basic member (4) and thus holds it against the basic member (4).

2. A device according to Claim 1,
**characterised in that** the retaining part (26) forms a substantially pocket-shaped seat (30) for the contact element (22).

3. A device according to Claim 2,
**characterised in that** the retaining part (26) comprises a recess which forms the pocket-shaped seat (30).

4. A device according to Claim 2,
**characterised in that** the pocket-shaped seat (30) is formed between mutually facing faces of the retaining part (26) and of the basic member (4).

5. A device according to one of Claims 2 to 4,
**characterised in that** the retaining means comprise two spaced apart retaining parts (26, 28), which comprise mutually facing seats (30, 34) for receiving opposite ends (32, 36) of the contact element (22).

6. A device according to Claim 2,
**characterised in that** the pocket-shaped seat is formed substantially complementary to the associated end of the contact element (22).

7. A device according to Claim 1,
**characterised in that** at least one retaining means (86) is constructed as a flat strip which engages over the contact element (22) distant from its end (32, 36).

8. A device according to Claim 2,
**characterised in that** the retaining means distant from the pocket-shaped seat or the pocket-shaped seats (30, 34) comprise at least one web (38, 40, 42, 44) moulded on the elastic material of the base member (4), against which the contact element (22) lies in the assembly position.

9. A device according to Claim 8,
**characterised in that** at least two webs (38, 40, 42, 44) are provided, against which the contact element (22) lies in the assembly position with opposite edges.

10. A device according to Claim 1,
**characterised in that** the contact element (22) has an elongate construction.

11. A device according to Claim 10,
**characterised in that** the contact element (22) is accommodated in pocket-shaped seats (30, 34) in the longitudinal direction at its ends (32, 36).

12. A device according to Claim 8,
**characterised in that** the contact element (22) is adjacent to the web or the webs (38, 40, 42) in the assembly position at one of its longitudinal edges or at both its longitudinal edges.

13. A device according to Claim 1,
**characterised in that** the support element (10) has a substantially strip-shaped construction.

14. A device according to Claim 1,
**characterised in that** the support element (10) is securely connected to the part (12) made from elastic material or **in that** the support element (10) is coated at least partially with the elastic material (12) of the basic member (4), in particular on its side facing away from the member to be bonded in the assembly position, or is embedded into the elastic material (12) of the basic member (4), a contact face for the contact element (22) being left free on the side of the support element (10) facing the member to be bonded in the assembly position.

15. A device according to Claim 1,
**characterised in that** the basic member (4) is constructed in such a manner that in the assembly position it engages around the member (2) to be bonded in the manner of a ring or a sleeve.

16. A device according to Claim 1,
**characterised in that** the basic member (4) has a flexible construction.

17. A device according to Claim 1,
**characterised in that** the basic member (4) is constructed in one piece and open in the circumferential direction and at its free ends comprises bent or angled lugs (6, 8), which in the assembly position can be connected to each other, preferably by means of a screw device or a clamping device.

18. A device according to Claim 1,
**characterised in that** the support element (10) comprises at least one opening (50-60), preferably on either side of the contact element (22), through which the elastic material (12) extends in such a manner that the elastic material (12) on the side of the support element (10) facing the contact element (22) is connected to the elastic material on the side of the support element (10) facing away from the contact element (22).

19. A device according to Claim 1,
**characterised in that** the device (2) comprises sealing means for sealing a space formed between the member to be bonded and the basic member (4) in the assembly position to prevent the penetration of air and/or moisture.

20. A device according to Claim 19,
**characterised in that** the sealing means comprise sealing lips (14, 16), made from elastic material, which are disposed at one side of the basic member (4) facing the member to be bonded in the assembly position and are spaced apart at right angles to the longitudinal direction of the basic member (4) or in its axial direction, and which extend in the longitudinal direction of the basic member (4) or in its circumferential direction, preferably substantially over the entire length of the basic member (4) in this direction, and which in the assembly position of the device (2) lie tightly against the member to be bonded.

21. A device according to Claim 20,
**characterised in that** the retaining means are moulded on the sealing lips (14, 26).

22. A device according to Claim 1,
**characterised in that** the contact element (22) is made from profiled sheet metal.

23. A device according to Claim 22,
**characterised in that** the contact element (22) has a substantially wavy or meandering or zigzag profile.

24. A device according to Claim 22,
**characterised in that** the profiling of the contact element (22) consists of successive arched, triangular or trapezoidal crests (80, 84) and troughs (82) having a round cross section.

25. A device according to Claim 22,
**characterised in that** the profiling is uniformly constructed substantially over the entire length of the contact element (22).

26. A device according to Claim 22 or 25,
**characterised in that** the contact element (22) is constructed without profiling in the longitudinal direction at its ends (32, 34) or is flattened at these ends (32, 34).

27. A device according to Claim 22,
**characterised in that** the contact element (22) has an elastically deformable construction in such a manner that it lies elastically resiliently against the member to be bonded in the assembly position.

28. A device according to Claim 22,
**characterised in that** as a result of the profiling of the contact element (22) successive projections (80, 82, 84) are formed, with which the contact element (22) is, preferably alternately, adjacent to the electrically conductive part of the member to be bonded and the carrier element (10) in the assembly position of the device (2), in such a manner that an electrically conductive connection is produced between the electrically conductive part of the member to be bonded and the support element (10) of the basic member (4).

29. A device according to one of the preceding Claims,
**characterised in that** the elastic material of the basic member (4) and/or of the sealing lips (14, 16, 18, 20) is made of an elastomer, in particular vulcanised rubber and/or a thermoplastic elastomer.

## Revendications

1. Dispositif pour la mise en contact électriquement conducteur d'une partie électriquement conductrice d'un corps sensiblement cylindrique, par exemple un tube ou un câble,
avec un corps de base (4) formé en tant que collier de serrage pouvant être serré autour du corps à mettre en contact, et en appui sur le corps à mettre en contact, le corps de base (4) présentant un élément porteur (10) en métal et une partie en matériau élastique, et
avec un élément de contact (22) distinct maintenu séparé sur la surface interieure radiale de l'élément porteur (10) par des moyens de retenue, pour réaliser une liaison électriquement conductrice entre l'élément porteur (10) et le corps à mettre en contact,
**caractérisé en ce que** l'élément de contact (22) est relié de manière séparable au corps de base (4) et
**en ce que** les moyens de retenue présentent au moins une pièce de retenue (26) en matériau élastique formée sur le matériau élastique du corps de base (4), laquelle pièce de retenue s'étend depuis un bord axial (27) de l'élément de contact (22) jusqu'au bord axial opposé (29) de l'élément de contact (22), de telle sorte que la pièce de retenue (26) recouvre l'élément de contact (22) sur son côté opposé au corps de base (4) et, de ce fait, le maintient sur le corps de base (4).

2. Dispositif selon la revendication 1,
**caractérisé en ce que** la pièce de retenue (26) forme un logement de réception sensiblement en forme de poche (30) pour l'élément de contact (22).

3. Dispositif selon la revendication 2,
**caractérisé en ce que** la pièce de retenue (26) présente un évidemment qui forme le logement de réception (30) en forme de poche.

4. Dispositif selon la revendication 2,
**caractérisé en ce que** le logement de réception (30) en forme de poche est formé entre les surfaces opposées l'une à l'autre de la pièce de retenue (26) et du corps de base (4).

5. Dispositif selon l'une des revendications 2 à 4,
**caractérisé en ce que** les moyens de retenue présentent deux pièces de retenue (26, 28) écartées l'une de l'autre qui présentent des logements de réception en forme de poche (30, 34) tournés l'un vers l'autre pour recevoir les extrémités opposées (32, 36) de l'élément de contact (22).

6. Dispositif selon la revendication 2,
**caractérisé en ce que** le logement de réception en forme de poche est formé de manière sensiblement complémentaire à l'extrémité associée de l'élément de contact (22).

7. Dispositif selon la revendication 1,
**caractérisé en ce qu'**au moins une partie de retenue (86) est réalisée sous forme de bande plate qui recouvre l'élément de contact (22) à l'écart de ses extrémités (32, 36).

8. Dispositif selon la revendication 2,
**caractérisé en ce que** les moyens de retenue présentent au moins une patte (38, 40, 42, 44) éloignée du ou des logements de réception en forme de poche (30, 34), formée sur le matériau élastique du corps de base (4) sur laquelle l'élément de contact (22) est en appui à l'état monté.

9. Dispositif selon la revendication 8,
**caractérisé en ce que** au moins deux pattes (38, 40, 42, 44) sont prévues, sur lesquelles l'élément de contact (22) s'appuie par ses bords opposés, à l'état monté.

10. Dispositif selon la revendication 1,
**caractérisé en ce que** l'élément de contact (22) est réalisé allongé.

11. Dispositif selon la revendication 10,
**caractérisé en ce que** l'élément de contact (22) est logé en direction longitudinale à ses extrémités (32, 36) dans les logements de réception en forme de poche (30, 34).

12. Dispositif selon la revendication 8,
**caractérisé en ce que** l'élément de contact (22) s'appuie, à l'état monté, sur l'un de ses bords longitudinaux ou respectivement sur ses deux bords longitudinaux sur la ou les pattes (38, 40, 42, 44).

13. Dispositif selon la revendication 1,
**caractérisé en ce que** l'élément porteur (10) est réalisé sensiblement en forme de bande.

14. Dispositif selon la revendication 1,
**caractérisé en ce que** l'élément porteur (10) est relié fixement avec la partie (12) en matériau élastique ou **en ce que** l'élément porteur (10) est recouvert au moins en partie avec le matériau élastique (12) du corps de base (4), en particulier, à l'état monté, sur son côté opposé au corps à mettre en contact, ou bien est enrobé dans le matériau élastique (12) du corps de base (4), une surface de contact pour l'élément de contact (22) étant laissée libre à l'état monté sur la face de l'élément porteur (10) tournée vers le corps à mettre en contact.

15. Dispositif selon la revendication 1,
**caractérisé en ce que** le corps de base (4) est réalisé de telle sorte que, à l'état monté, il entoure le corps à mettre en contact sous forme d'anneau ou sous forme de manchon.

16. Dispositif selon la revendication 1,
**caractérisé en ce que** le corps de base (4) est réalisé souple.

17. Dispositif selon la revendication 1,
**caractérisé en ce que** le corps de base (4) est réalisé d'une seule pièce et ouvert en direction périphérique et présente à ses extrémités libres des plaquettes (6, 8) repliées ou recourbées, qui peuvent être reliées l'une à l'autre à l'état monté, de préférence au moyen d'un dispositif à vis ou d'un dispositif à pincement.

18. Dispositif selon la revendication 1,
**caractérisé en ce que** l'élément porteur (10) présente au moins une traversée (50-60), de préférence au moins une traversée des deux côtés de l'élément de contact (22), au travers de laquelle ou desquelles s'étend le matériau élastique (12) de telle sorte que le matériau élastique (12), sur le côté de l'élément porteur (10) tournée vers l'élément de contact (22), est en liaison avec le matériau élastique sur le côté de l'élément porteur (10) opposé à l'élément de contact (22).

19. Dispositif selon la revendication 1,
**caractérisé en ce que** le dispositif (2) présente des moyens d'étanchéité pour rendre étanche à l'entrée d'air et/ou d'humidité, un espace formé, à l'état monté, entre le corps à mettre en contact et le corps de base (4).

20. Dispositif selon la revendication 19,
**caractérisé en ce que** les moyens d'étanchéité comportent des lèvres d'étanchéité (14, 16) en matériau élastique espacées entre elles, disposées sur un côté du corps de base (4) tourné vers le corps à mettre en contact, à l'état monté, transversalement à la direction longitudinale du corps de base (4) ou respectivement dans sa direction axiale, les lèvres d'étanchéité s'étendant dans la direction longitudinale du corps de base (4) ou respectivement dans sa direction périphérique, de préférence sensiblement sur l'ensemble de la longueur du corps de base (4) dans cette direction, et étant en appui étanche, à l'état monté du dispositif (2), sur le corps à mettre en contact.

21. Dispositif selon la revendication 20,
**caractérisé en ce que** les moyens de retenue sont formés sur les lèvres d'étanchéité (14, 26).

22. Dispositif selon la revendication 1,
**caractérisé en ce que** l'élément de contact (22) est constitué d'une tôle profilée.

23. Dispositif selon la revendication 22,
**caractérisé en ce que** l'élément de contact (22) est profilé sensiblement en forme d'ondes ou méandres ou zigzags.

24. Dispositif selon la revendication 22,
**caractérisé en ce que** le profilage de l'élément de contact (22) est constitué de sommets d'onde (80, 84) et de creux d'onde (82) successifs, de section transversale circulaire, courbée, triangulaire ou trapézoïdale.

25. Dispositif selon la revendication 22,
**caractérisé en ce que** le profilage est réalisé régulièrement sur l'ensemble de la longueur de l'élément de contact (22).

26. Dispositif selon la revendication 22 ou 25,
**caractérisé en ce que** l'élément de contact (22) est constitué sans profilage en direction longitudinale à ses extrémités (32, 36) ou est aplati à ses extrémités (32, 36).

27. Dispositif selon la revendication 22,
**caractérisé en ce que** l'élément de contact (22) est réalisé élastiquement déformable de sorte que, à l'état monté, il repose de manière élastique sur le corps à mettre en contact.

28. Dispositif selon la revendication 22,
**caractérisé en ce que**, par le profilage de l'élément de contact (22), on forme des reliefs (80, 82, 84) successifs, avec lesquels l'élément de contact (22) est en appui, à l'état monté du dispositif (2), de préférence de manière alternée, sur la partie électriquement conductrice du corps à mettre en contact et sur l'élément porteur (10), de telle sorte que, entre la partie électriquement conductrice du corps à mettre en contact et l'élément porteur (10) du corps de base (4), une liaison électriquement conductrice est établie.

29. Dispositif selon l'une des revendications précédentes,
**caractérisé en ce que** le matériau élastique du corps de base (4) et/ou des lèvres d'étanchéité (14, 16, 18, 20) est formé par un élastomère, en particulier un caoutchouc vulcanisé et/ou un élastomère thermoplastique.
